# EUROPEAN PATENT SPECIFICATION

(11) **EP 3 754 371 B1**
(45) Date of publication and mention of the grant of the patent: **30.07.2025**
(21) Application number: 20179176.1
(22) Date of filing: 10.06.2020
(51) Int. Cl.: G01S 7/62, G01S 15/89, G01S 15/96

(54) **UNDERWATER DETECTION APPARATUS AND UNDERWATER DETECTION METHOD**
VORRICHTUNG UND VERFAHREN ZUR UNTERWASSERDETEKTION
APPAREIL ET PROCÉDÉ DE DÉTECTION SOUS-MARINE

(30) Priority: 19.06.2019 JP 2019114145
(43) Date of publication of application: 23.12.2020
(73) Proprietor: Furuno Electric Co., Ltd., Nishinomiya-City, Hyogo 622-8580 (JP)
(72) Inventor: IWATA, Kohei, Nishinomiya, Hyogo 662-8580 (JP)
(74) Representative: Cleveland Scott York

(56) References cited:
- JP-A- H0 943 350
- LIV HOVLAND: "Visualization of 3D Structures in Underwater Volumes in Sonar Performance Context", 1 June 2004 (2004-06-01), Ostfold University College, XP055687545, Retrieved from the Internet <URL:http://www.ia.hiof.no/~gunnarmi/masters/hovland2004v3s.pdf> [retrieved on 20200420]
- BRUNO JOUVENCEL ET AL: "3D Reconstruction of seabed surface through sonar data of AUVs", INDIAN JOURNAL OF MARINE SCIENCES, 7 December 2012 (2012-12-07), pages 509 - 515, XP055738338, Retrieved from the Internet <URL:https://hal-lirmm.ccsd.cnrs.fr/lirmm-00812888/document> [retrieved on 20201008]
- JEAN-PAUL BALABANIAN ET AL: "Sonar Explorer: A New Tool for Visualization of Fish Schools from 3D Sonar Data", 1 January 2007 (2007-01-01), XP055738340, Retrieved from the Internet <URL:https://www.cg.tuwien.ac.at/research/publications/2007/balabanian-2007-ant/balabanian-2007-ant-paper.pdf> [retrieved on 20201007], DOI: 10.2312/vissym/eurovis07/155-162

## Description

### Technical Field

The present disclosure relates to an underwater detection apparatus and an underwater detection method which transmit a transmission wave underwater, and detect a position of a target object based on a reflection wave of the transmission wave.

### Background of the Invention

It is known that conventional underwater detection apparatuses are configured to transmit a transmission wave underwater, and detect a position of a target object based on a reflection wave of the transmission wave. One type of the underwater detection apparatus transmits the transmission waves in all directions. An echo of the transmission wave is received from each given direction by a beamforming. The underwater detection apparatus measures a position of a target object in each direction based on the reception signal. Another type of the underwater detection apparatus rotates an ultrasonic transducer capable of forming a narrow beam so as to detect position of target objects around a ship.

For example, the underwater detection apparatus may be separately provided with a transmitter having one or more ultrasonic transducers, and a receiver having a plurality of ultrasonic transducers. The receiver rotates synchronizing with a rotation of the transmitter so as to generate reception signals. At this time, the receiver causes a reception beam to scan in the depth direction by the beamforming. In this manner, the reception signals are generated in the entire range around the ship. The underwater detection apparatus acquires based on the generated reception signals, the position of the target objects from the receiver, and three-dimensional (3D) volume data in which the positions associate with echo intensities. The underwater detection apparatus processes this volume data so as to display an underwater state below the ship on a display unit. WO2018/163844A1 discloses this type of underwater detection apparatus.

As a method of displaying the 3D volume data, surface rendering method is known. When the surface rendering method is applied to the 3D volume data generated by the underwater detection apparatus described above, isosurfaces having a given echo intensity are displayed on a screen. Therefore, a user can three-dimensionally grasp the underwater state below the ship.

However, in this method, for example, an isosurface of a school of fish and an isosurface of a seabed are displayed in the same colour. Therefore, it is difficult for the user to grasp shapes of the school of fish and the seabed, and a positional relationship between the school of fish and the seabed. Moreover, when a plurality of schools of fish exists, isosurfaces of the schools of fish are applied with the same colour. Thus, the user cannot grasp the echo intensity of each school of fish although the echo intensity is important for identifying a species of fish.

JP H09 43350 A discloses an ultrasonic sonar that displays echo data obtained by transmitting and receiving an ultrasonic beam. The sonar acquires three-dimensional echo data and creates and displays isosurfaces. Multiple reflected echo level threshold values are used for each target object, and an isosurface is created for each threshold value. Each of the multiple isosurfaces is displayed in an overlapping manner on the screen.

The document "Visualization of 3D Structures in Underwater Volumes in Sonar Performance Context", Liv Hovland, 1 June 2004, Ostforld University College, discloses a sonar that acquires echo data and displays the echo data in a three-dimensional manner. A 3D visualization of the sonar performance data can be made with the marching cubes algorithm generating the outer surface of the sonar data structure.

### Summary of the Invention

In view of the problems described above, one purpose of the present disclosure is to provide an underwater detection apparatus and an underwater detection method which enable a user to three-dimensionally grasp a shape and a position of a target object, and appropriately grasp an echo intensity of the target object.

According to one aspect of the present invention there is provided an underwater detection apparatus as defined in claim 1.

According to another aspect of the present invention there is provided an underwater detection method as defined in claim 7.
Preferred features of the invention are recited in the dependent claims.

Since the isosurface of each group is displayed, a user can three-dimensionally grasp a shape and a position of a target corresponding to each group. Moreover, since the property based on the representative echo intensity of the first group is applied to the corresponding isosurface, the user can smoothly grasp the echo intensity of the target corresponding to the group.

The representative echo intensity calculation module may calculate the representative echo intensity of the first group based on an averaging of the plurality of echo intensity data contained within the isosurface.

According to this configuration, the user can grasp an overall echo intensity of each target, based on the property according to the representative echo intensity set for the isosurface of the target.

Alternatively, the representative echo intensity calculation module may calculate the representative echo intensity of the first group based on a maximum value of the plurality of echo intensity data contained within the isosurface.

According to this configuration, the user can smoothly grasp the echo intensity from the core of each target based on the property according to the representative echo intensity set for the isosurface of the target.

The image data generation module may set a colour corresponding to the representative echo intensity as the property.

Since the echo intensity is displayed in the colour as described above, the user can smoothly and intuitively grasp the echo intensity of each target.

The image data generation module may set a property of the isosurface of a second group from the plurality of groups, different from the first group, based on a depth to the isosurface of the second group.

A group type of the first group may be a school of fish in water, and a group type of the second group may be a bottom of a body of the water.

Since the isosurface of each group is displayed, the user can three-dimensionally grasp the shape and the position of the target corresponding to each group. Moreover, since the property according to the representative echo intensity is applied to the isosurface of the first group, the user can smoothly grasp the echo intensity of the target corresponding to the first group. Furthermore, since the property according to the depth to the isosurface is applied to the isosurface of the second group, the user can smoothly grasp the depth to the target corresponding to the second group.

### Effect(s) of the Invention

According to the present disclosure, an underwater detection apparatus and an underwater detection method can be provided, which enable a user to three-dimensionally grasp a shape and a position of a target object, and appropriately grasp an echo intensity of the target object.

The effects or significance of the present disclosure will become clearer by the description of embodiments described below. However, the embodiments described below are merely examples for carrying out the present disclosure, and the present disclosure is not limited to the embodiments.

### Brief Description of Drawings

The present disclosure is illustrated by way of example and not by way of limitation in the figures of the accompanying drawings, in which like reference numerals indicate like elements and in which:
Fig. 1 is a block diagram illustrating a configuration of an underwater detection apparatus according to Embodiment 1;
Fig. 2 is a view schematically illustrating a transmission beam formed by a transmission transducer according to Embodiment 1;
Fig. 3 is a view schematically illustrating a fan area which is a range where a reception beam is electronically scanned according to Embodiment 1;
Fig. 4 is a block diagram illustrating a configuration of a signal processing device according to Embodiment 1;
Fig. 5 is a view schematically illustrating a distribution of reference positions of echo intensity in the fan area according to Embodiment 1;
Fig. 6 is a view illustrating a display example of an image when processing based on a surface rendering method is applied to volume data according to a reference example;
Fig. 7 is a view illustrating a display example of an image when a colour according to a depth is applied to an isosurface according to another reference example;
Fig. 8 is a view illustrating a display example of an image in which the image of Fig. 7 is converted into a side view;
Fig. 9 is a block diagram illustrating a configuration of an echo signal processing module according to Embodiment 1;
Fig. 10 is a flowchart illustrating processing of generating image data according to Embodiment 1;
Fig. 11A is a view schematically illustrating isosurfaces each set to the same group according to Embodiment 1, and Fig. 11B is a view schematically illustrating a state in which colours according to representative echo intensities are applied to the isosurfaces of Fig. 11A;
Fig. 12 is a view illustrating a display example of an image according to Embodiment 1;
Fig. 13 is a flowchart illustrating processing of generating image data according to Embodiment 2;
Fig. 14 is a view illustrating a display example of an image according to

### Embodiment 2; and

Fig. 15 is a view illustrating another display example of an image according to Embodiment 2.

### Detailed Description of the Invention

### <Embodiment 1>

Hereinafter, one embodiment of the present disclosure is described with reference to the accompanying drawings.

In the embodiments described below, the present disclosure is applied to an underwater detection apparatus of so-called a multi-ping type, as an example. The multi-ping type may also be called as a multi-pulse type. Note that the present disclosure is not limited to the embodiment described below.

For example, in a typical underwater detection apparatus of a pulse type, after a transmission pulse wave is transmitted, a receiver receives a reflection wave of the transmission pulse wave in the time period for the transmission pulse wave to go and come back from a detection range. After the time period for the transmission pulse wave to go and come back in the detection range is lapsed, a subsequent transmission pulse wave may be transmitted.

On the other hand, in the underwater detection apparatus of the multi-ping type, after a transmission pulse wave at a given frequency band is first transmitted, a subsequent transmission pulse wave at a frequency band different from the given frequency band may be transmitted before the first transmission pulse wave goes and comes back in the detection range. A reflection wave of each transmission pulse wave may be extracted by a filter corresponding to the frequency band. Therefore, according to the underwater detection apparatus of the multi-ping type, since a transmission interval of the transmission pulse waves can be shortened, a detection speed of a target object can be increased compared with the typical underwater detection apparatus of the pulse type.

A transmission transducer and a reception transducer of the underwater detection apparatus 1 may be mounted on a bottom of a ship. Note that the present disclosure may be applied to ships which typically travel on water or sea, referred to as surface ships, and may also be applied to other types of ships including boats, dinghies, watercrafts, and vessels. The underwater detection apparatus 1 may be used for detecting target objects, such as fish and a school of fish. In addition, the underwater detection apparatus 1 may also be used for detection of ups and downs of a bottom of a body of water (for example seabed, bottom of a lake) such as a reef, a structure such as an artificial reef, etc.

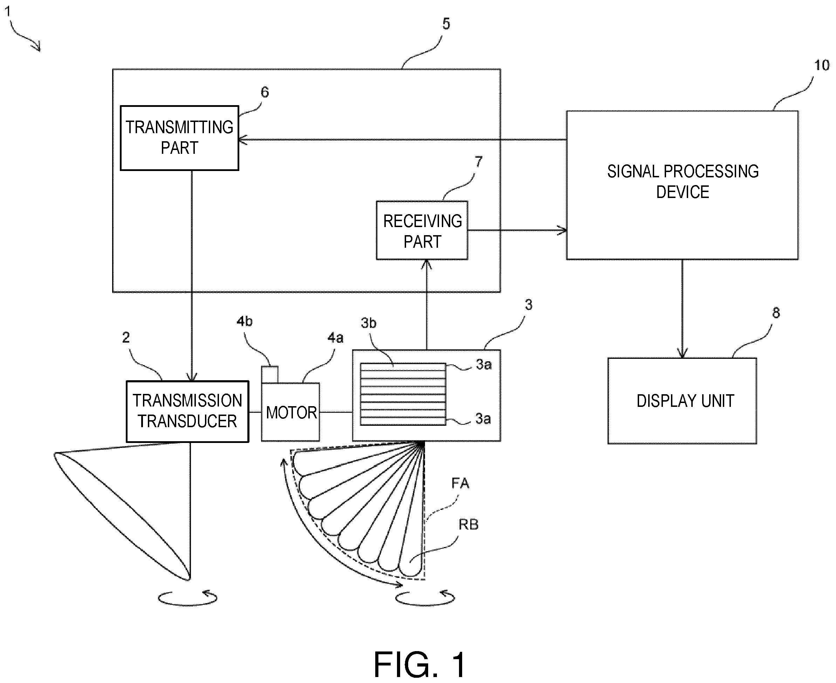

Fig. 1 is a block diagram illustrating a configuration of the underwater detection apparatus 1.

As illustrated in Fig. 1, the underwater detection apparatus 1 may include the transmission transducer 2, the reception transducer 3, a motor 4a, a rotational angle detector 4b, a transmission/reception device 5, a signal processing device 10, and a display unit 8.

The transmission transducer 2 may include one or more ultrasonic transducers. The transmission transducer 2 may be configured to be capable of forming a 3D transmission beam TB. The transmission transducer 2 may transmit a pulse-shaped ultrasonic wave (which may also be referred to as a transmission pulse wave or a transmission wave) underwater.

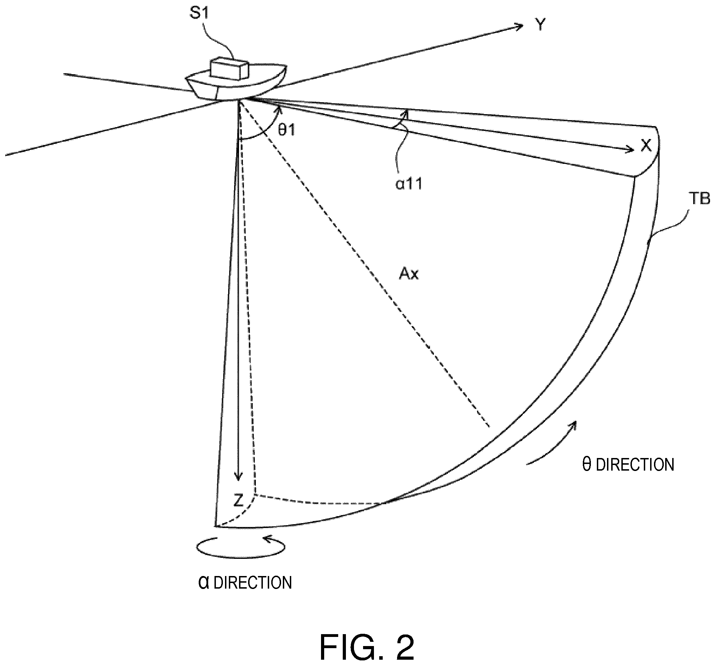

Fig. 2 is a view schematically illustrating the transmission beam TB formed by the transmission transducer 2.

In Fig. 2, a Z-axis may be oriented vertically downward from the transmission transducer 2, and a Y-axis may be parallel to a horizontal plane and oriented in a moving direction of a ship S1. An X-axis may be perpendicular to the Y-axis and the Z-axis. A state of the transmission beam TB illustrated here may be at a timing when the transmission pulse wave is transmitted in a direction parallel to the X-axis when seen vertically.

The transmission transducer 2 may be installed on the bottom of the ship so that a central axis Ax of the transmission beam TB is obliquely oriented with respect to the vertical direction (Z-axis direction). The transmission beam TB may have a width of an angle α11 in the horizontal direction, and have a substantially fan shape when seen in a circumferential direction around the Z-axis. The angle α11 may be 30°, but without being limited to this, it may be set within a range from 6° to 90°.

The transmission beam TB may spread vertically within a range of an angle θ1 with the vertical direction being 0°. The angle θ1 may be 90°, but without being limited to this, it may be about 60°. Moreover, a boundary of the spread of the transmission beam TB in the vertical direction is not necessarily the vertically downward. For example, the transmission beam TB may vertically spread in a range from 30° to 90° with respect to the vertically downward. Alternatively, the transmission beam TB may spread in a range from -60° to 60° with respect to the vertically downward.

Referring to Fig. 1, the reception transducer 3 may include a plurality of ultrasonic transducers 3a. These ultrasonic transducers 3a may be reception elements of the reception transducer 3. The reception transducer 3 may be provided separately from the transmission transducer 2. A receiving surface 3b of each ultrasonic transducer 3a is formed in a rectangular shape, for example. Note that, in the example of Fig. 1, the reception transducer 3 is provided with eight ultrasonic transducers 3a. The number of the ultrasonic transducers 3a provided to the reception transducer 3 is not limited to eight, but may be another number. Note that Fig. 1 schematically illustrates the shape and an orientation of each receiving surface 3b.

Each ultrasonic transducer 3a may receive the reflection wave of the transmission pulse wave transmitted from the transmission transducer 2, and generate a reception signal according to an echo intensity of the reflection wave. The ultrasonic transducers 3a may be arranged linearly. That is, the reception transducer 3 may be a linear array. An angle formed between a direction perpendicular to the wave receiving surface of the linear array (i.e., a direction in which a reception beam RB is formed), and the horizontal plane, is set, for example, as 30° when an angle of depression is set as positive. However, this angle may be another angle as long as it is within a range from 0° which is an angle when the linear array is arranged vertically, to 90° which is an angle when the linear array is arranged horizontally.

The motor 4a may rotate the transmission transducer 2 about a rotational axis parallel to the vertical direction. Therefore, the transmission beam TB may be rotated in all horizontal directions centring on the ship S1 (Z-axis) of Fig. 2. Moreover, the motor 4a may rotate the reception transducer 3 about a rotational axis parallel to the vertical direction so as to synchronize the rotation with the rotation of the transmission transducer 2. The transmission transducer 2 and the reception transducer 3 may be rotated so as to be oriented in the same direction. Therefore, the reflection wave of the ultrasonic wave (transmission pulse wave) transmitted from the transmission transducer 2 may be received by the reception transducer 3.

The rotational angle detector 4b may detect a rotational angle of the motor 4a. The rotational angle detector 4b may be attached to the motor 4a. The rotational angle detector 4b is a rotary encoder, for example. However, the method of detecting the rotational angle of the motor 4a is not limited to this. For example, when the motor 4a is a stepping motor, the rotational angle of the motor 4a may be detected based on the number of steps from a reference position. Angular positions of the transmission transducer 2 and the reception transducer 3 with respect to a given reference axis in the horizontal plane may be detected based on the rotational angle of the motor 4a. This reference axis is set, for example, to the X-axis in Fig. 2.

The transmission transducer 2 may form the transmission beam TB for every given angle with respect to the reference axis while being rotated by the motor 4a as described above, and transmit the ultrasonic waves (transmission pulse waves). Moreover, the reception transducer 3 may form the reception beam RB in each angular position in which the transmission beam TB is transmitted from the transmission transducer 2, and generate the reception signal of the reflection wave. The reception transducer 3, together with the transmission/reception device 5 and the signal processing device 10, may perform a beamforming so as to electrically scan the reception beam RB vertically. The reception beam RB may be electrically scanned vertically within a fan area FA.

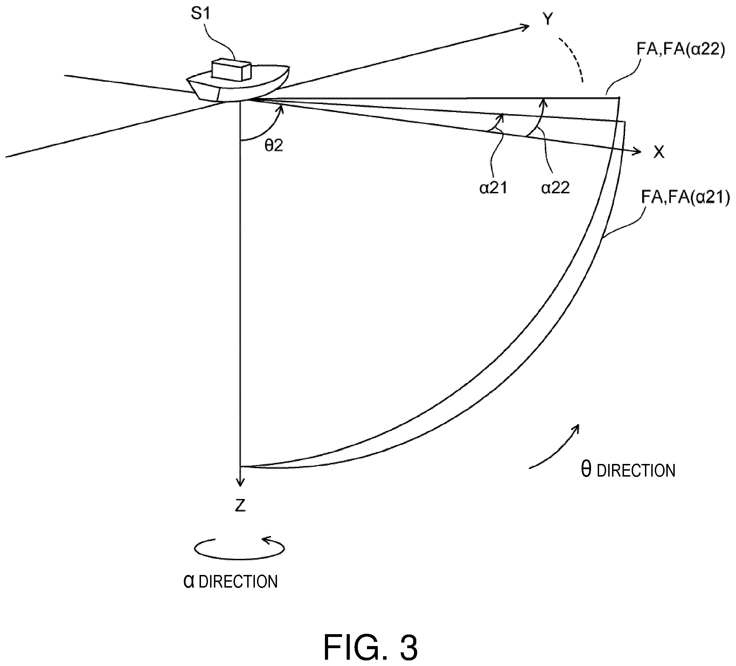

Fig. 3 is a view schematically illustrating the fan area FA which is a range where the reception beam RB is electronically scanned. An X-axis, a Y-axis, and a Z-axis of Fig. 3 may be the same as Fig. 2.

The fan area FA may have a comparatively thin width angle of about 6° in a circumferential direction, and spread vertically in a sector shape from the ship S1. In Fig. 3, a fan area FA(α21) is the fan area FA when the angular position is a first angular position α21, and a fan area FA(α22) is the fan area FA when the angular position is a second angular position α22.

An angle θ2 of the fan area FA in the vertical direction may be about 90° with the vertical direction being 0°. The fan area FA may be formed in a range from the vertically downward to the horizontal direction. The reception beam RB which is electronically scanned within the fan area FA may be rotated together with the fan area FA by the motor 4a of Fig. 1, in the α-direction along the horizontal plane. Therefore, the target object may be detected within a 3D hemisphere space centring on the ship S1, and a 3D position of the target object within the space may be estimated.

Note that the angle θ2 is not limited to 90°, and a boundary of the angle θ2 may not be the vertically downward. For example, the angle θ2 may be in an angle range from 30° to 90° with respect to the vertically downward, or the angle θ2 may be in a range from -60° to 60° with respect to the vertically downward.

**In** this embodiment, as described above, the transmission and reception of the waves may be performed in so-called a multi-ping method. **In** detail, the transmission pulse wave may be transmitted from the transmission transducer 2 in each angular position so that a frequency band of the transmission pulse wave is different at adjacent angular positions.

For example, three frequency bands FB1, FB2, and FB3 may be prepared for the transmission pulse wave. These frequency bands FB1, FB2, and FB3 may be cyclically set for each angular position. A signal at the frequency band set for each angular position may be extracted from the signals outputted from the reception transducer 3 at each angular position, and the reception signal may be generated based on the extracted signal. As described above, the reception signal may be generated based on the reception beam RB formed by the beamforming.

Note that the details of the signal processing in the multi-ping method is disclosed in WO2018/163844A1 which is an application filed by the present applicant before.

Referring to Fig. 1, the transmission/reception device 5 may include a transmitting part 6 and a receiving part 7.

The transmitting part 6 may amplify a transmission pulse signal generated by the signal processing device 10, and apply the amplified transmission pulse signal to the transmission transducer 2. Therefore, the transmission pulse wave corresponding to the amplified transmission pulse signal may be transmitted from the transmission transducer 2. In detail, a first transmission pulse wave corresponding to a transmission pulse signal at the frequency band FB1, a second transmission pulse wave corresponding to a transmission pulse signal at the frequency band FB2, and a third transmission pulse wave corresponding to a transmission pulse signal at the frequency band FB3 may be transmitted with a given interval therebetween. These transmissions of waves may be cyclically repeated with a given interval. Accordingly, as described above, the transmission pulse waves at different frequency bands may be transmitted in adjacent angular positions (in angular positions at a transmission timing).

The receiving part 7 may amplify the echo signal (reception signal) outputted from the reception transducer 3, and carry out an analog-to-digital (A/D) conversion of the amplified echo signal. Then, the receiving part 7 may output the echo signal converted into a digital signal to the signal processing device 10. In detail, the receiving part 7 may have a plurality of receiving circuits. Each receiving circuit may carry out the given processing described above to the echo signal of the reflection wave received by the corresponding ultrasonic transducer 3a, and output the echo signal to the signal processing device 10.

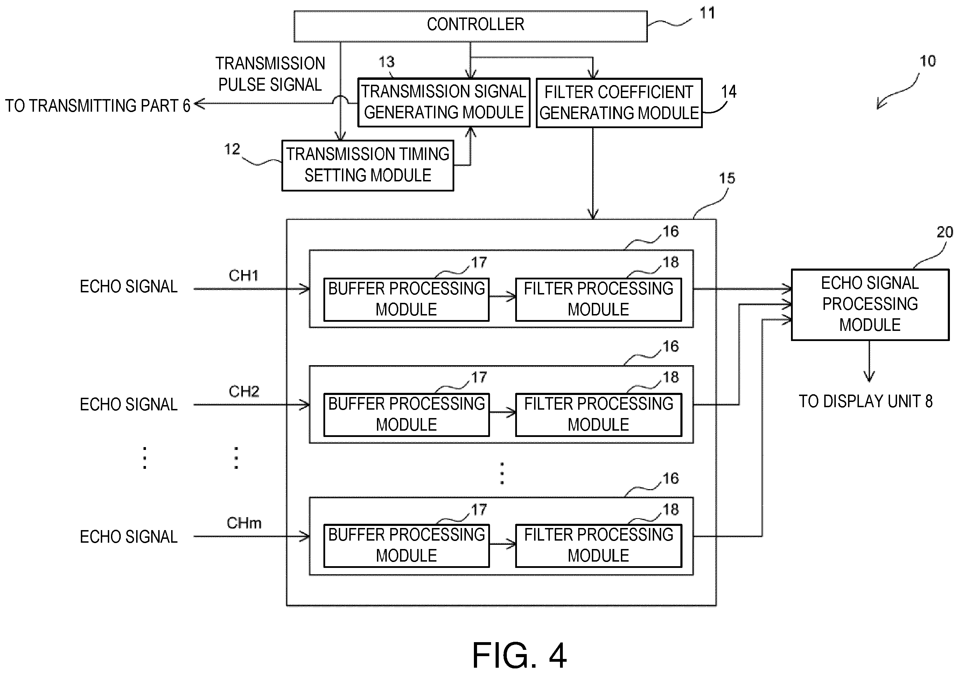

The signal processing device 10 may generate the transmission pulse signal described above, and output the generated transmission pulse signal to the transmitting part 6. Moreover, the signal processing device 10 may process the echo signal inputted from the receiving part 7, and generate image data of the target object. The configuration of the signal processing device 10 will be described later with reference to Fig. 4.

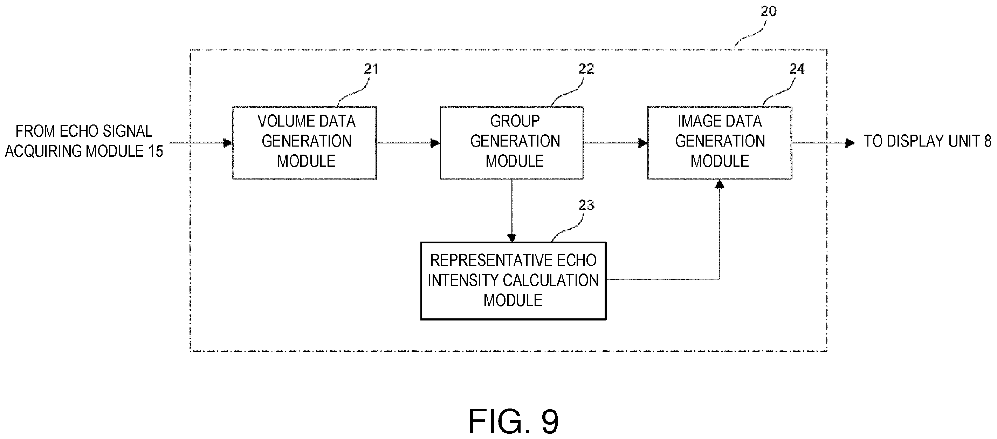

The display unit 8 may have a monitor on which an image is displayed, and display the image according to the image data outputted from the signal processing device 10. In this embodiment, an underwater state below the ship may be three-dimensionally displayed. Therefore, the user can grasp the underwater state below the ship (e.g., existence and locations of a single fish and a school of fish, ups and downs of the seabed, and a structure such as an artificial reef) by referring to the image. Note that processing of generating the image data, and display examples of the images displayed based on the image data will be described later with reference to Figs. 9 to 12.

Fig. 4 is a block diagram illustrating a configuration of the signal processing device 10.

The signal processing device 10 may be comprised of, for example, a personal computer. The signal processing device 10 may include a processing circuit such as a CPU (Central Processing Unit), and a storage medium such as a ROM (Read Only Memory), a RAM (Random Access Memory), and a hard disk drive. The storage medium may store a program for implementing processing for the underwater detection. The signal processing device 10 may implement functions of respective parts illustrated in Fig. 4 by this program. That is, Fig. 4 illustrates a functional block implemented by the signal processing device 10 based on the program.

Note that the function of each block of Fig. 4 is not necessarily implemented by a software program. That is, a part of the functions illustrated in Fig. 4 may not be implemented by the program, but by hardware.

As illustrated in Fig. 4, the signal processing device 10 may include a controller 11, a transmission timing setting module 12, a transmission signal generating module 13, a filter coefficient generating module 14, an echo signal acquiring module 15, and an echo signal processing module 20.

The controller 11 may control each component according to the program. The controller 11 may detect the angular position of the transmission transducer 2 based on the detection result of the rotational angle detector 4b illustrated in Fig. 1. Based on the detected angular position, the controller 11 may notify to the transmission timing setting module 12 a timing for transmitting the transmission pulse wave. At this time, the controller 11 may simultaneously output to the transmission signal generating module 13 information related to the frequency band of the transmission pulse wave at each timing, that is, information on any one of the frequency bands FB1, FB2, and FB3 (hereinafter, referred to as "frequency information").

The transmission timing setting module 12 may output to the transmission signal generating module 13 a trigger signal which causes the transmission pulse signal at each frequency band to be outputted, according to the timing notification from the controller 11.

The transmission signal generating module 13 may output to the transmitting part 6 the transmission pulse signal at any one of the frequency bands FB1, FB2, and FB3 according to the trigger signal inputted from the transmission timing setting module 12 and the frequency information inputted from the controller 11. Therefore, the transmission pulse wave at any one of the frequency bands FB1, FB2, and FB3 may be transmitted from the transmission transducer 2 at the angular position at which the transmission pulse wave is to be transmitted.

Furthermore, when the controller 11 outputs the frequency information to the transmission signal generating module 13, it may output the similar frequency information to the filter coefficient generating module 14. At this time, the controller 11 may simultaneously output to the filter coefficient generating module 14 a filter specification for generating a filter coefficient used for filtering (e.g., a centre frequency of a passband, a bandwidth of the passband, a reduction level of a stopband, and a filter length).

The filter coefficient generating module 14 may generate a filter coefficient based on the frequency information and the filter specification inputted from the controller 11. The filter coefficient may be used for extracting the echo signal at the frequency band specified by the frequency information. That is, the filter coefficient generating module 14 may generate a filter coefficient C1 when the frequency band specified by the frequency information is the frequency band FB1. Similarly, the filter coefficient generating module 14 may generate filter coefficients C2 and C3 when the frequency bands specified by the frequency information are the frequency bands FB2 and FB3, respectively. The filter coefficient generating module 14 may notify the generated filter coefficient (any one of the filter coefficients C1, C2 and C3) to the echo signal acquiring module 15.

Note that the filter coefficients C1, C2 and C3 are not necessarily generated each time based on the frequency information and the filter specification. The filter coefficients C1, C2 and C3 may be stored in the memory so as to associate with the frequency bands FB1, FB2, and F3, respectively. In this case, the filter coefficient associating with the frequency band specified by the frequency information may be read from the memory and notified to the echo signal acquiring module 15.

The echo signal acquiring module 15 has the same number of echo signal extracting modules 16 as that of the ultrasonic transducers 3a disposed on the reception transducer 3. The echo signal extracting modules 16 may be provided so as to associate with the ultrasonic transducers 3a. The echo signals outputted from a 1^{st} to m^{th} ultrasonic transducers 3a may be inputted into the respective echo signal extracting modules 16 via corresponding channels CH1-CHm. Each echo signal extracting module 16 may extract from the inputted echo signal a signal component at the frequency band specified by the frequency information, and output the extracted signal component to the echo signal processing module 20 as an echo signal to be processed.

Each echo signal extracting module 16 may include a buffer processing module 17 and a filter processing module 18. After the frequency information is notified, the buffer processing module 17 may temporarily store the echo signal inputted from the corresponding channel until the next frequency information is notified, and output the stored echo signal to the filter processing module 18. The filter processing module 18 may apply the filter coefficient (any one of the filter coefficients C1, C2, and C3) inputted from the filter coefficient generating module 14 to the echo signal inputted from the buffer processing module 17. The filter processing module 18 may extract from the inputted echo signal the frequency component at the frequency band (any one of the frequency bands of FB1, FB2, and FB3) corresponding to the filter coefficient. The filter processing module 18 may output the extracted frequency component to the echo signal processing module 20 as the echo signal to be processed.

According to the above processing, the echo signal of the transmission pulse wave at the given frequency band (any one of the frequency bands FB1, FB2, and FB3) transmitted in each angular position may be extracted by the echo signal extracting module 16 of the corresponding channel. Therefore, while the transmission transducer 2 and the reception transducer 3 rotate horizontally one time, the echo signal may be acquired for each channel from the 3D space in the hemisphere shape centring on the ship S1, and the acquired echo signal may be outputted to the echo signal processing module 20.

The echo signal processing module 20 may process the echo signal of each channel inputted from the echo signal acquiring module 15 so as to generate the image data. The echo signal processing module 20 may apply the beamforming on the echo signals acquired via the respective channels in the fan area FA at each rotational position. Accordingly, the echo signal processing module 20 may acquire the reception signal for each reception beam RB. The reception beam RB may be scanned in the θ-direction of Fig. 3 with a given resolution. Therefore, the reception signal within one fan area FA may be acquired with the same resolution as that of the reception beam RB in the θ-direction of Fig. 3.

The echo signal processing module 20 may acquire an echo intensity generated at each reference position within the fan area FA as data, based on the reception signal included in the fan area FA.

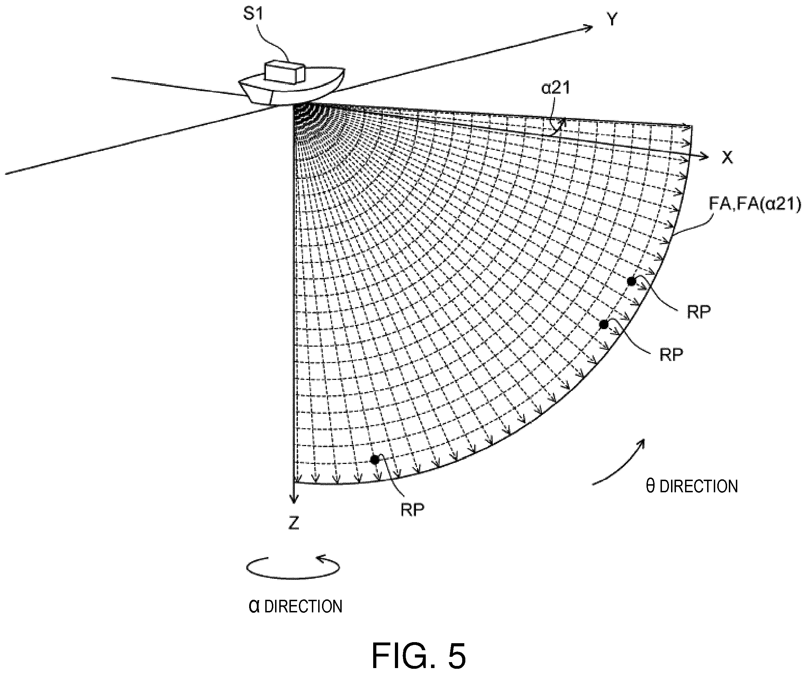

Fig. 5 is a view schematically illustrating a distribution of reference positions RP of the echo intensity in the fan area FA. Fig. 5 illustrates the distribution of the reference positions RP (intersections of broken lines) in the fan area FA(α21) where the horizontal angular position with respect to the reference axis (the X-axis) is the first angular position α21.

In Fig. 5, a plurality of arrows in broken lines is radially extending from the ship S1. Each broken-line arrow may indicate a direction of the reception beam RB. The reception signal may be acquired in each direction of the broken-line arrow extending radially. Moreover, in Fig. 5, a plurality of arc-shaped broken lines centring on the ship S1 indicates distance positions where the echo intensity is referred. Each distance position may correspond to a time position of a waveform of the reception signal starting at the transmission timing of the transmission pulse wave. The echo intensity data may be acquired from the reception signal at a constant time interval stating at the transmission timing of the transmission wave.

Therefore, the reference positions RP of the echo intensity in the fan area FA may be set at a constant interval on the broken lines extending radially. In Fig. 5, all the intersections of the broken lines extending radially and the arc-shaped broken lines are the reference positions RP of the echo intensity. The echo intensities generated at these reference positions RP may be acquired as data.

Note that, in Fig. 5, the directions of the reception beams RB and the distance positions where the echo intensity is referred are schematically indicated by the broken-line arrows and the arc-shaped broken lines, respectively. However, an actual pitch of the directions of the reception beam RB and an actual pitch of the distance positions may be both remarkably narrower than those illustrated in Fig. 5. Therefore, the reference positions RP of the echo intensity may actually be distributed more finely than Fig. 5.

The echo signal processing module 20 may acquire the echo intensity data generated at each reference position RP within the fan area FA, based on the reception signal included in the fan area FA. The echo signal processing module 20 may similarly acquire the echo intensity data in the fan area FA at each angular position in the α-direction. **In** this manner, the echo signal processing module 20 may acquire the echo intensity data for the fan areas FA of one round (i.e., a 360° revolution) around on the ship S1. The echo intensity data may constitute volume data which is a data group acquired from the reference positions RP distributed three-dimensionally in a detection range of the hemisphere shape.

Note that the detection range (i.e., the range where the volume data is acquired) is not necessarily the hemisphere shape, but may be a range horizontally narrower than 360°. Moreover, the shape of the detection range may change according to the change in the shape of the fan area FA in Fig. 5.

The echo signal processing module 20 may process the volume data for one round so as to generate the image data for three-dimensionally displaying the state below the ship S1, and output the generated image data to the display unit 8. Accordingly, the underwater state below the ship may be three-dimensionally displayed on the display unit 8.

### (Method of Generating Image Data)

As a method of three-dimensionally visualizing the volume data, a surface rendering method can be used. In this method, a given threshold may be set for the echo intensity data included in the volume data. A surface (isosurface) may be created for a data group having the echo intensity at the threshold. As an algorithm for creating the isosurface, a known method called Marching cubes may be used. The isosurface may be applied with a given colour, for example. Therefore, a surface of the seabed, a surface of the school of fish, and a surface of noise may be displayed three-dimensionally.

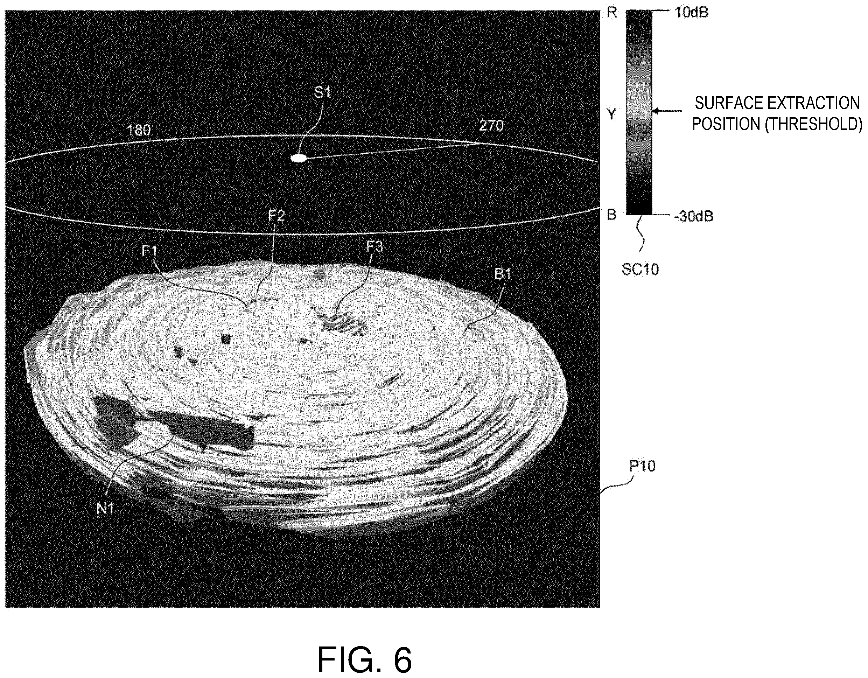

Fig. 6 is a view illustrating a display example of an image P10 when processing based on the surface rendering method is applied to the volume data.

In Fig. 6, although the image P10 is illustrated in black and white for convenience, the actual image P10 is a colour image. A colour scale SC10 is provided on the right side of the image P10. R, Y, and B of the scale SC10 indicate red, yellow and blue, respectively. In the scale SC10, a colour is gradually changed from red to yellow, and then to blue. Scale values obtained by digitalizing the echo intensity are provided on the right side of the scale SC10. In this display example, the threshold for extracting the surface is set near the middle of the scale SC10.

In the example of the image P10, a seabed B1, three schools of fish F1, F2, and F3, and noise N1 are displayed three-dimensionally. It can be confirmed that the schools of fish F1, F2, and F3 are at positions slightly above the seabed B1. The position of the ship S1 is indicated above the seabed B1. Thus, the positions of the ship S1, the seabed B1, and the schools of fish F1 to F3 may be confirmed.

However, in the display form of Fig. 6, since the surfaces (isosurfaces) of the data groups having the echo intensities at the threshold are applied with the same colour, the surfaces (isosurfaces) of the seabed B1 and the schools of fish F1 to F3 are applied with the same colour. Since a shading is applied to the surfaces of the seabed B1 and the schools of fish F1 to F3 by processing based on the Marching cubes method, the surfaces thereof may be somewhat visually distinguishable. However, in the display form of Fig. 6, since these surfaces are applied with the same colour as described above, it may be difficult to smoothly grasp shapes of the seabed B1 and the schools of fish F1 to F3, and a positional relationship therebetween.

In order to solve this problem, a method can be used in which a colour according to a depth is applied to the isosurface generated based on the Marching cubes method.

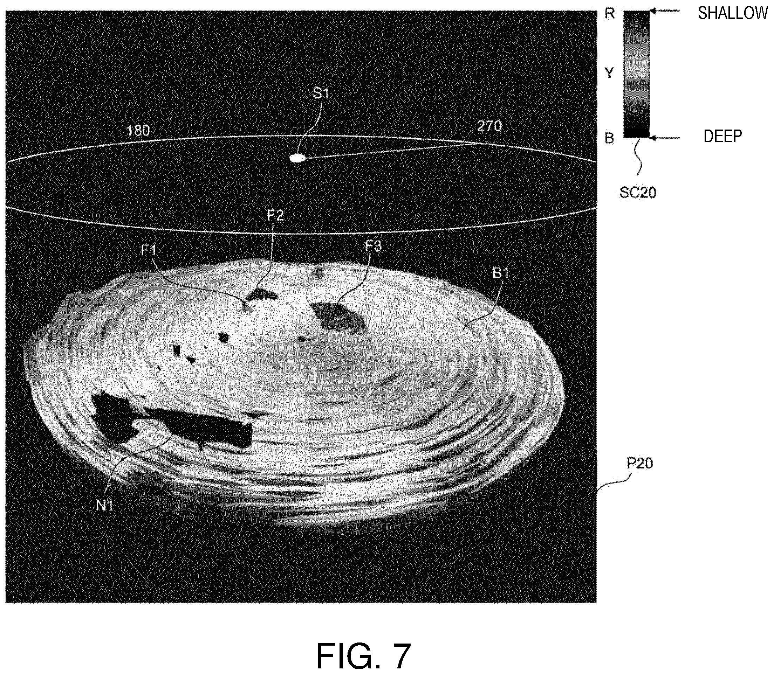

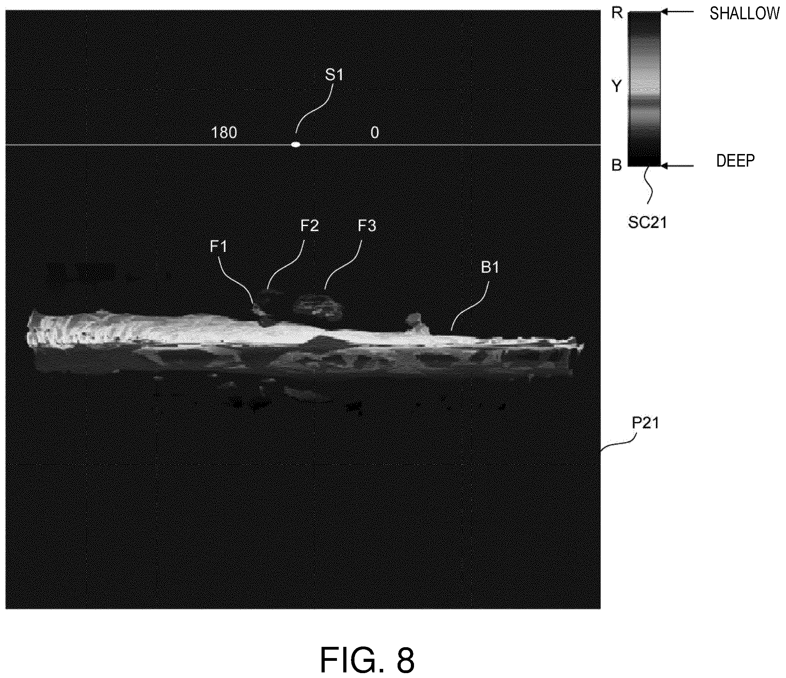

Fig. 7 is a view illustrating a display example of an image P20 when the isosurface is applied with the colour corresponding to the depth. Fig. 8 is a view illustrating a display example of an image P21 in which the image P20 of Fig. 7 is converted into a side view.

Similar to Fig. 6, the images P20 and P21 are illustrated in black and white in Figs. 7 and 8. Colour scales SC20 and SC21 are provided on the right side of the images P20 and P21, respectively. R, Y, B of the scales SC20 and SC21 indicate red, yellow and blue, respectively. Depth is indicated on the right side of the scales SC20 and SC21. The volume data for generating the images P20 and P21 is the same as that of Fig. 6. Moreover, the threshold for extracting the surface is similar to that of Fig. 6.

As illustrated in Fig. 7, when each isosurface is coloured according to the depth, the surfaces of the schools of fish F1 to F3 and the surface of the seabed B1 may be different in colour, and therefore, the schools of fish F1 to F3 and the seabed B1 may be distinguishable visually and clearly. Therefore, in this display form, the shapes of the seabed B1 and the schools of fish F1 to F3, and the positional relationship therebetween can be grasped smoothly. Moreover, in the display form of Fig. 8, it can be smoothly confirmed that the schools of fish F1 to F3 are slightly above the seabed B1.

However, in this display form, the magnitude of the echo intensity of the schools of fish F1 to F3 cannot be confirmed. When visualizing the school of fish, the echo intensity of the school of fish may be important, for example, for identifying the species of fish and confirming the echo intensity from the core of the school of fish. In the display form of Figs. 7 and 8, although the shapes of the schools of fish F1 to F3 and the seabed B1 can be easily grasped, the magnitude of the echo intensity of each school of fish cannot be grasped.

Therefore, in this embodiment, a display form based on the echo intensity may be applied to the isosurface generated based on the Marching cubes method. This configuration is described below.

Fig. 9 is a block diagram illustrating a configuration of the echo signal processing module 20.

The echo signal processing module 20 includes a volume data generation module 21, a group generation module 22, a representative echo intensity calculation module 23, and an image data generation module 24.

The volume data generation module 21 may generate the volume data described above based on the echo signal of each channel inputted from the echo signal acquiring module 15. The configuration of the volume data may be as described with reference to Fig. 5. The volume data may include a plurality of echo intensity data generated at the respective reference positions RP within the detection range.

The group generation module 22 sets a given threshold to the volume data for the surface rendering, and group the data included in the volume data into a plurality of groups having the echo intensity above the threshold. This threshold may be set in advance, or may be suitably changeable by the user.

The representative echo intensity calculation module 23 calculates a representative value of the echo intensity (representative echo intensity) of the group based on the grouped data. The representative echo intensity calculation module 23 may calculate, for example, an average value of the echo intensity of the data included in each group as the representative echo intensity of each group.

Alternatively, the representative echo intensity calculation module 23 may calculate the representative echo intensity of each group based on the maximum value of the echo intensity of the data included in each group. In this case, the maximum value of the echo intensity may be used as the representative echo intensity as it is, or the representative echo intensity may be calculated by multiplying the maximum value by a given value (e.g., a coefficient according to the average of the echo intensity). Moreover, the representative echo intensity may be a value other than the average value and the maximum value of the echo intensity. For example, a histogram of the echo intensities may be obtained from the data included in each group so that the echo intensity corresponding to a mode value of the histogram is used as the representative echo intensity.

The image data generation module 24 may generate the image data by applying a display form based on the representative echo intensity of each group to the isosurface generated based on the echo intensity data of the group. For example, the image data generation module 24 may apply a colour based on the representative echo intensity to the isosurface of each group. In this case, the image data generation module 24 may store, for example, a table in which the representative echo intensity is associated with a colour. The image data generation module 24 may apply the colour associated with the representative echo intensity to the isosurface of each group.

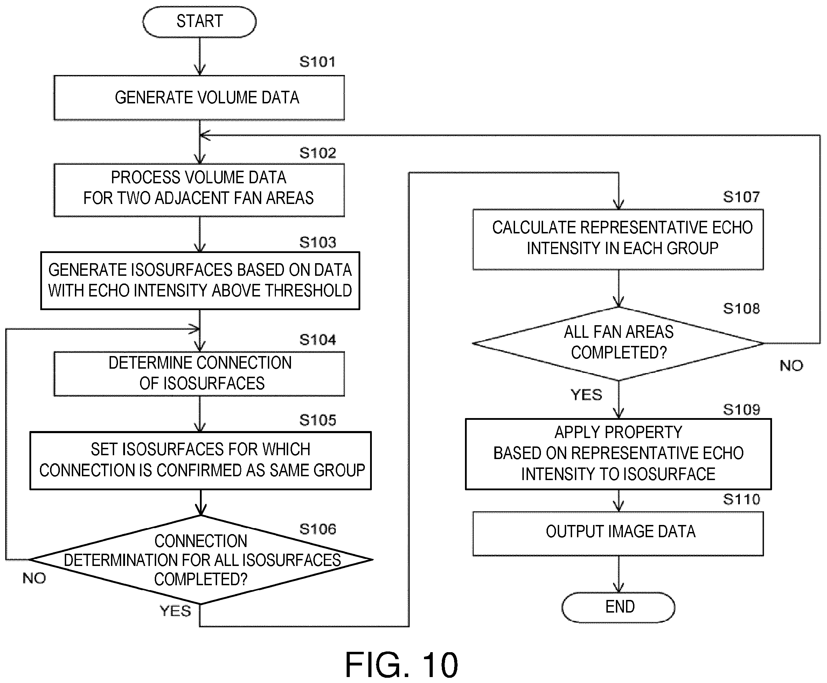

Fig. 10 is a flowchart illustrating processing of generating the image data.

When the operation of the underwater detection apparatus 1 starts, the volume data generation module 21 may sequentially generate the volume data for the fan area FA at each angular position, and output the generated volume data to the group generation module 22 (Step S101).

The group generation module 22 may process the volume data for two adjacent fan areas FA inputted from the volume data generation module 21 (Step S102). Here, first, the volume data for the first and second fan areas FA from the reference axis may be processed.

The group generation module 22 extracts the data with the echo intensity above the threshold, and generate the surfaces (isosurfaces) based on the extracted data (Step S103). Next, the group generation module 22 determines a connection between the generated isosurfaces (Step S104), and set the isosurfaces for which the connection is confirmed, as the same group (Step S105). The determination of the connection may be executed based on the Marching cubes method, for example.

When the isosurface is generated based on the Marching cubes method, a 3D space (substantially regular hexahedron) comprised of eight adjacent points (3D position of each data comprising the volume data) may be treated as one unit. A generating pattern of the isosurface can be determined based on a relation in magnitude between the intensities at the eight points and the threshold. According to this generating pattern, it can be grasped whether an apex of the isosurface exists on each side of the 3D space of one unit. When the threshold exists on a side shared by adjacent regular hexahedrons, the isosurfaces of these regular hexahedrons can be determined to be connected to each other. On the other hand, if the threshold does not exist on the side shared by adjacent regular hexahedrons, it can be determined that the isosurfaces of these regular hexahedrons are not connected to each other.

Note that, the method of determining the connection between isosurfaces is not limited to this. For example, in a manner similar to the method described above, while treating the 3D space (substantially regular hexahedron) comprised of eight adjacent points (3D position of each data comprising the volume data) as one unit, the isosurfaces of the adjacent regular hexahedrons may be determined to be connected to each other when the isosurface exists in each of adjacent regular hexahedrons. However, in order to determine the connection of the isosurfaces more accurately, the method of determining the connection based on the Marching cubes method as described above may be applied.

The group generation module 22 may repeat Steps S104 and S105 until the connection determination for all the isosurfaces is completed (Step S106).

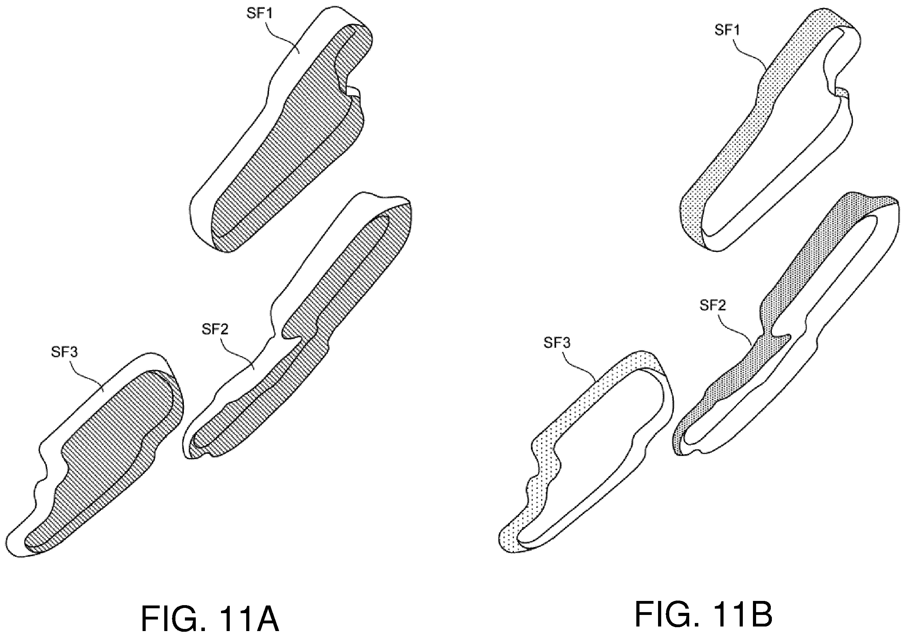

Fig. 11A is a view schematically illustrating the isosurfaces each set to a group.

In the example of Fig. 11A, three isosurfaces SF1, SF2, and SF3 are grouped. A plurality of data comprising a part of the volume data may be included on these isosurfaces SF1 to SF3 and areas inside the isosurfaces SF1 to SF3 (hatched areas). That is, the data indicative of the echo intensities generated at the reference positions RP included in these areas may be grouped into the isosurfaces SF1 to SF3, so as to be associated with respective reference positions RP. Based on the data of each group, common isosurfaces SF1 to SF3 may be generated.

Referring to Fig. 10, when the group generation module 22 completes the grouping of the isosurface (Step S106: YES), the representative echo intensity calculation module 23 calculates the representative echo intensity of each group (Step S107). The representative echo intensity calculation module 23 may calculate the representative echo intensity based on the data contained on and within the isosurface of each group. As described above, the representative echo intensity may be calculated by, for example, averaging the echo intensities of these data.

Note that the representative echo intensity may be calculated based on the data contained within the isosurface. Alternatively, when the grouped data exists only on the isosurface but not within the isosurface (i.e., when the volume of the grouped data is small), the representative echo intensity may be calculated based on the data included only on the isosurface. The data used for the calculation of the representative echo intensity may be set to a range of data with which the representative echo intensity can be appropriately calculated.

When the representative echo intensity is calculated, the echo signal processing module 20 may determine whether the processing is completed for all the fan areas FA of one round (i.e., a 360° revolution) (Step S108). If the determination at Step S108 is NO, the echo signal processing module 20 may return to Step S102, and execute the processing for the next fan area FA. Since the processing is executed for the first and second fan areas FA in the above processing, here, the processing for the second and third fan areas FA may be executed.

First, grouping of the isosurface is executed by the group generation module 22 at Steps S102-S106 for the data in the second and third fan areas FA. If the isosurface grouped in this processing and the isosurface grouped in the previous processing connect to each other, these isosurfaces are set to the same group. That is, a width of the isosurface of the same group generated in the previous processing may increase by a width of the isosurface connected by the processing of this time.

At Step S107, the representative echo intensity calculation module 23 calculates the representative echo intensity for the isosurface of each group thus newly generated. Here, the representative echo intensity may be calculated according to the data contained on the entire isosurface newly generated, and the data contained within the newly generated isosurface.

For example, when the representative echo intensity is calculated by averaging the echo intensities, the averaging may be performed based on the representative echo intensity acquired in the previous processing, a number of the data used for the averaging in the previous processing, the echo intensity of each data newly added to the group this time, and a number of the data newly added to the group this time. **In** this case, the representative echo intensity calculation module 23 may need to store the representative echo intensity calculated in the previous processing, and the number of the data used for the averaging in the previous processing.

Note that, the processing at Step S107 may be executed only for the group to which the isosurface is newly connected this time, and Step S107 may be skipped for the group to which the isosurface is not newly connected this time. Therefore, the calculation of the representative echo intensity can be simplified.

The echo signal processing module 20 may repeat the processing at Steps S102 to S107 for all the fan areas FA of one round. Therefore, the groups of the isosurface may be acquired for the entire circumferential range below the ship S1. In this manner, when the processing for all the fan areas FA of one round is completed (Step S108: YES), the image data generation module 24 may apply a display form (which may also be referred to as a property) (e.g., a colour) to the isosurface of each group based on the representative echo intensity of the group (Step S109).

Fig. 11B is a view schematically illustrating a state in which colours according to the representative echo intensities are applied to the isosurfaces SF1 to SF3 of Fig. 11A. In practice, an isosurface may be further connected to each of the isosurfaces SF1 to SF3 to form an isosurface with a width corresponding to the target object. The colour corresponding to the representative echo intensity of each group is applied to these isosurfaces.

In this way, a display form based on the representative echo intensity of each group is applied to each isosurface, and the image data over the entire circumferential range below the ship S1 may be generated. The image data generation module 24 may output the generated image data to the display unit 8 (Step S110). Therefore, the image in which the underwater state below the ship S1 is displayed three-dimensionally may be displayed on the display unit 8. Thus, the processing for this round may be completed. Then, the echo signal processing module 20 may return to Step S101, and execute processing for the next round. Therefore, the display image may be updated. The echo signal processing module 20 may continue the processing until the underwater detection apparatus 1 finishes its operation.

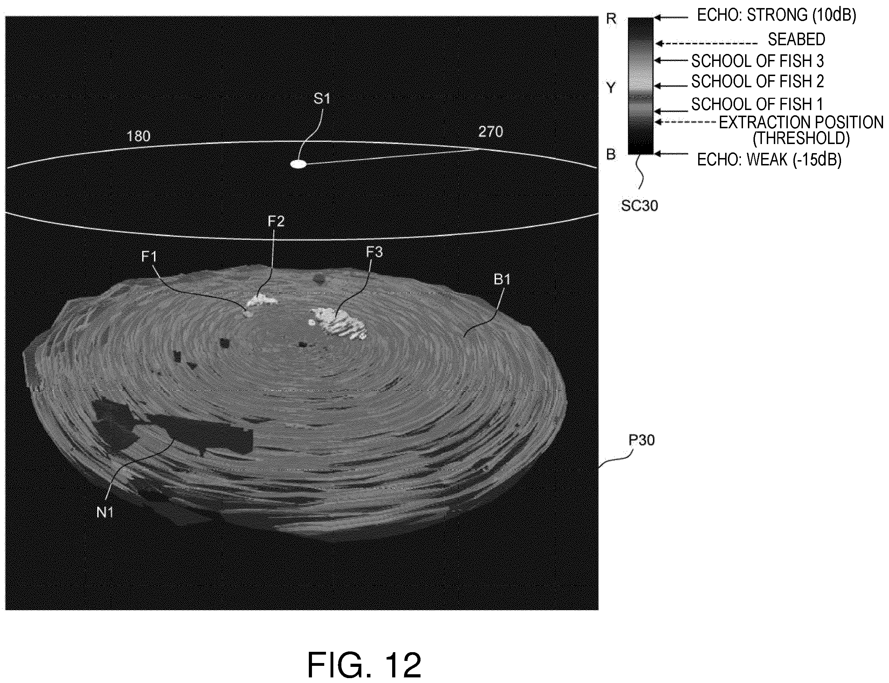

Fig. 12 is a display example of an image P30 when the image data is generated by the processing of Fig. 10.

Similar to Figs. 6 and 7, the image P30 is illustrated in black and white in Fig. 12. A colour scale SC30 is provided on the right side of the image P30. R, Y, B of the scale SC30 indicate red, yellow and blue, respectively. A label indicating the echo intensity is provided on the right side of the scale SC30. The echo intensity used for extracting the isosurface (threshold), and the echo intensities of the seabed and the schools of fish are indicated on the scale SC30, for convenience.

As illustrated in Fig. 12, when the colours according to the representative echo intensities are applied to the isosurfaces of respective groups, the schools of fish F1 to F3 and the seabed B1 may be distinguishable visually and clearly. Therefore, the shapes of the seabed B1 and the schools of fish F1 to F3, and the positional relationship therebetween can be grasped smoothly. Moreover, in the display form of Fig. 12, the colour according to the echo intensity of each of the schools of fish F1 to F3 may be applied to the corresponding isosurface. Therefore, the user can clearly grasp the echo intensity of each school of fish based on the colour. Thus, the user can grasp the species of fish, and the echo intensity from the core of each school of fish. **In** addition, the user can grasp the echo intensity of the seabed based on the displayed colour of the seabed B1. Thus, the user can identify the characteristic of the seabed (e.g., a sandy seabed and a rocky seabed).

### (Effect of Embodiment 1)

According to this embodiment, the following effects may be achieved.

Since the isosurface of each group is displayed, the user can three-dimensionally grasp the shape and the position of the target object (the schools of fish F1 to F3, and the seabed B1) corresponding to each group. Moreover, since the display form (colour) based on the representative echo intensity of each group is applied to the corresponding isosurface, the user can smoothly grasp the echo intensity of the target object (the schools of fish F1 to F3, and the seabed B1) corresponding to each group.

As described with reference to Fig. 11A, the representative echo intensity calculation module 23 may calculate the representative echo intensities of respective groups based on the plurality of echo intensity data contained on and within the corresponding isosurfaces SF1 to SF3. Therefore, the representative echo intensity of each group can be appropriately calculated.

Here, for example, the representative echo intensity calculation module 23 may calculate the representative echo intensity of each group based on, for example, the average echo intensity of the plurality of data contained on and within the corresponding isosurface. In this case, the colour according to the average echo intensity of each target object may be applied to the isosurface of the target object. Therefore, the user can grasp an overall echo intensity of each target object.

Alternatively, the representative echo intensity calculation module 23 may calculate the representative echo intensity of each group based on the maximum echo intensity of the plurality of data contained on and within the corresponding isosurface. In this case, the colour according to the maximum echo intensity of each target object may be applied to the isosurface of the target object. Therefore, the user can smoothly grasp the echo intensity from the core of each target object based on the colour applied to the isosurface of the target object.

As the display form (property) based on the representative echo intensity, the image data generation module 24 may apply the colour corresponding to the representative echo intensity to the isosurface of the target object. Since the echo intensity is displayed in colour as described above, the user can smoothly and intuitively grasp the echo intensity of each target object.

Note that the display form applied to the isosurface is not necessarily limited to hue. For example, transparency of the colour applied to the isosurface may be changed according to the representative echo intensity. In this case, the colour applied on the isosurface may be set darker as the representative echo intensity is higher, and set lighter as the representative echo intensity is lower. Alternatively, a pattern of hatching applied to the isosurface may be changed according to the representative echo intensity.

### <Embodiment 2>

In Embodiment 1, a common scale defining the relationship between the representative echo intensity and the colour may be applied to the isosurfaces of all the groups. On the other hand, in Embodiment 2, the scale to be applied may be changed depending on to which of a first group type or a second group type each isosurface belongs.

Here, the first group type may be an isosurface of other than a seabed, and the second group type may be an isosurface of the seabed. Whether the isosurface belongs to the second group type may be determined based on a known method of determining the seabed, for example, whether the representative echo intensity of the isosurface is included in a range of the echo intensity for the seabed defined in advance.

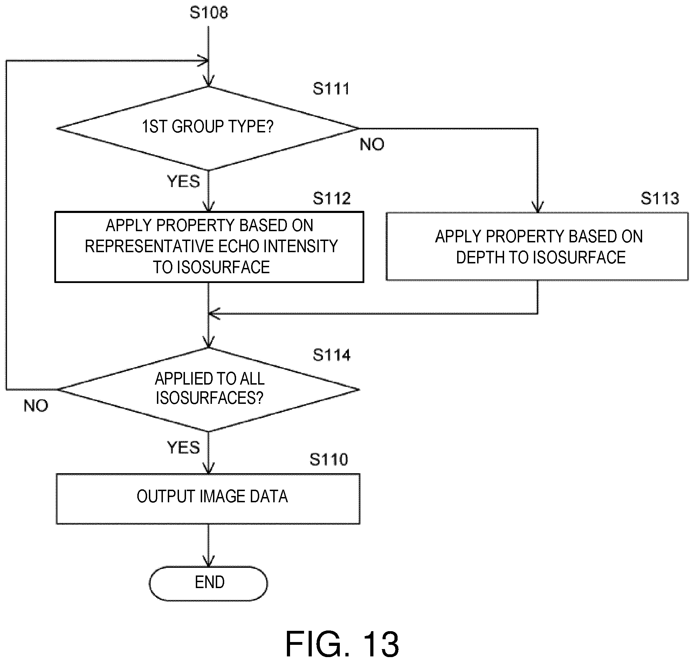

Fig. 13 is a flowchart illustrating processing of generating image data according to Embodiment 2.

Although Steps S101-S108 are omitted in the flowchart of Fig. 13 for convenience, they are also executed similar to Fig. 10. Moreover, in the flowchart of Fig. 13, Step S109 of Fig. 10 is replaced by Steps S111-S114.

When the determination at Step S108 is YES, the image data generation module 24 may determine whether the grouped isosurface belongs to the first group type or the second group type (Step S111).

When the isosurface belongs to the first group type (Step S111: YES), that is, when the isosurface is an isosurface of a target object other than the seabed (e.g., the school of fish), the image data generation module 24 may apply to the isosurface the display form (property) (here, a colour) according to the representative echo intensity of the isosurface (Step S112). On the other hand, when the isosurface belongs to the second group type (S111: NO), that is, when the isosurface is an isosurface of the seabed, the image data generation module 24 may apply to the isosurface the display form (property) (here, a colour) according to the depth to the isosurface (Step S113).

Then, the image data generation module 24 may determine whether the property is applied to all the isosurfaces (Step S114). If there still remains the isosurface to which the property is not applied (Step S114: NO), the image data generation module 24 may execute the processing at Steps S111-113 for the remaining isosurface(s). When the property is applied to all the isosurfaces (Step S114: YES), the image data generation module 24 may generate the image data in which each isosurface is applied with the property according to the Steps S112 and S113, and output the generated image data to the display unit 8. Therefore, the image in which the underwater state below the ship S1 may be displayed three-dimensionally can be displayed on the display unit 8.

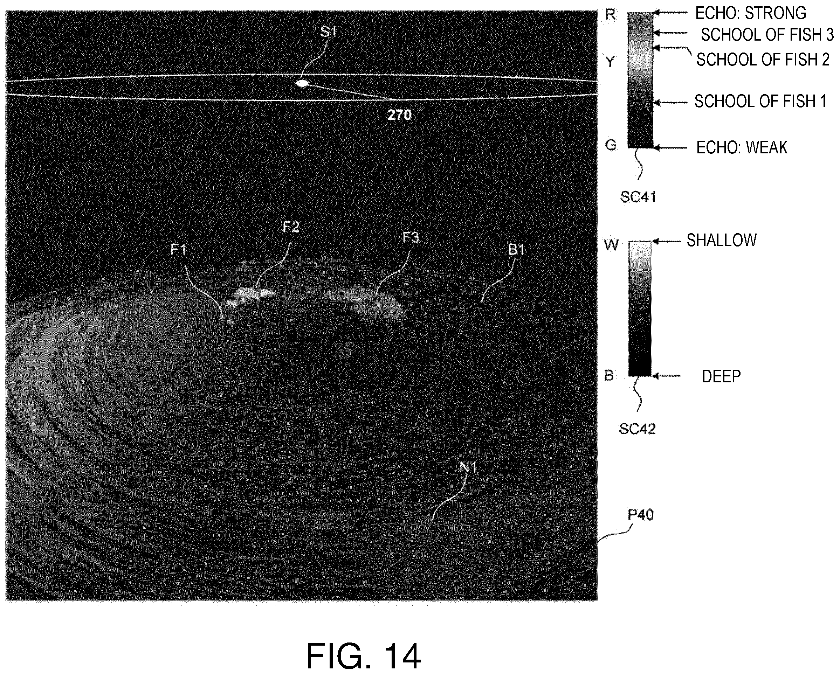

Fig. 14 is a view illustrating a display example of an image P40 when the image data is generated by the processing of Fig. 13.

Similar to Figs. 6, 7, and 12, the image P40 is illustrated in black and white in Fig. 14. Two colour scales SC41 and SC42 are provided on the right side of the image P40. The scale SC41 is applied for the first group type, and the scale SC42 is applied for the second scale type. R, Y, B of the scale SC41 indicate red, yellow and blue, respectively. A label indicating the echo intensity is provided on the right side of the scale SC41. W and B of the scale SC42 indicate white and blue, respectively. **In** the scale SC42, the lower end is dark blue, and the blue becomes lighter as it goes upward. On the right side of the scale SC42, a label indicating the depth is provided. The label indicating the depth may be a concrete numerical value.

As illustrated in Fig. 14, since the colour according to the representative echo intensity is applied to the isosurface of the group in the first group type, the schools of fish F1 to F3 may be distinguishable visually and clearly. Therefore, the shapes of the schools of fish F1 to F3, and the positional relationship therebetween can be grasped smoothly. Moreover, since the colour according to the echo intensity of each of the schools of fish F1 to F3 is applied to the corresponding isosurface, the user can clearly grasp the echo intensity of each school of fish. Thus, the user can compare the echo intensity from the core of each school of fish, for example.

Moreover, the colour according to the depth to the isosurface may be applied to the isosurface of the group in the second group type. Therefore, the user can grasp the ups and downs, and a slope of the seabed. Furthermore, since different colour systems are used for the scale SC41 and the scale SC42, the shapes of the seabed B1 and the schools of fish F1 to F3, the positional relationship therebetween, and a degree of floating (i.e., a gap) of the schools of fish F1 to F3 from the seabed B1 can be smoothly confirmed.

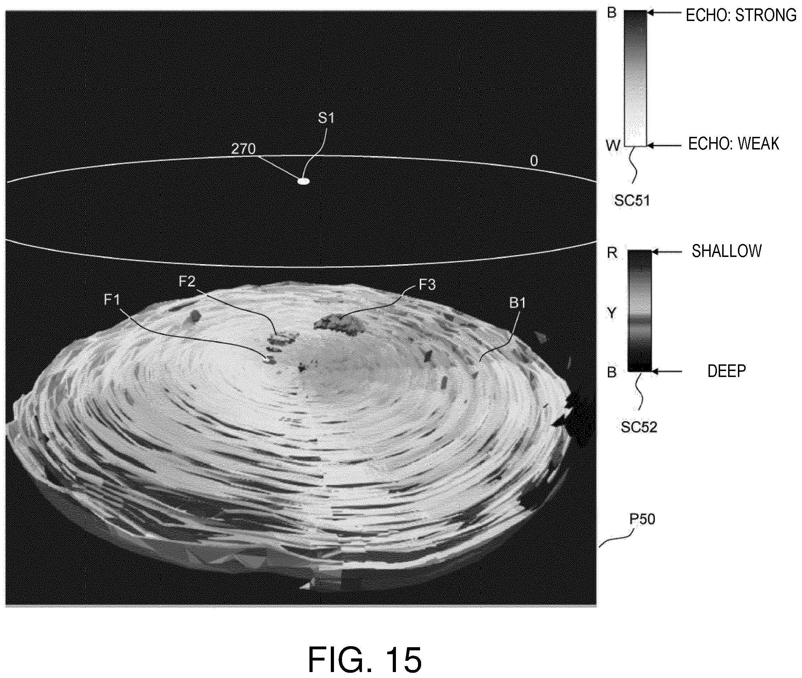

Fig. 15 is a view illustrating another display example of an image P50 when the image data is generated by the processing of Fig. 13.

Also in Fig. 15, the image P50 is illustrated in black and white for convenience. A colour scale SC51 is applied for the first group type, and a colour scale SC52 is applied for the second group type. B and W of the scale SC51 indicate brown and white, respectively. In the scale SC51, the upper end is dark brown, and the brown becomes lighter as it goes downward. A label indicating the echo intensity is provided on the right side of the scale SC51. The label indicating the echo intensity may be a concrete numerical value. R, Y, and B of the scale SC52 indicate red, yellow and blue, respectively. In the scale SC52, a colour is gradually changed from dark red to yellow, and then to dark blue. A label indicating the depth is provided on the right side of the scale SC52.

Also in this display form, the isosurfaces of the schools of fish F1 to F3 in the first group type may be clearly distinguishable. Therefore, the shapes of the schools of fish F1 to F3, and the positional relationship therebetween can be grasped smoothly. Moreover, since the colour according to the echo intensity of each of the schools of fish F1 to F3 is applied to the corresponding isosurface, the user can clearly grasp the echo intensity of each school of fish. Thus, for example, the user can compare the species of fish and the echo intensity from the core of the schools of fish.

Moreover, the colour according to the depth to the isosurface may be applied to the isosurface of the group in the second group type. Therefore, the user can grasp the ups and downs and the slope of the seabed. Furthermore, since different colour systems are used for the scale SC51 and the scale SC52, the shapes of the seabed B1 and the schools of fish F1 to F3, and the positional relationship therebetween, and the floating degree of the schools of fish F1 to F3 from the seabed B1 can be smoothly confirmed.

### <Modifications>

The present disclosure is not limited to the embodiments described above, and various changes are possible for the embodiments of the present disclosure in addition to the configurations described above.

For example, in Embodiments 1 and 2, the representative echo intensity of each group may be calculated and updated every time the volume data of adjacent fan areas FA are processed. However, the representative echo intensity of each group may be calculated after the entire volume data for one round is processed and the isosurface of each group is confirmed, based on the data contained on and within the isosurface.

Moreover, in Embodiment 2, the colour according to the depth to the isosurface may be applied to the isosurface of the second group type. However, the isosurface of the second group type may be applied with the colour according to the representative echo intensity similar to the first group type, and the first and second group types may be applied with scales in different colour systems. According to this, a contrast between the isosurface of the seabed, and the isosurface of the school of fish having the echo intensity approximate to that of the seabed can be increased, and thus, the seabed and the school of fish can be displayed so as to be clearly distinguishable.

Moreover, in the embodiments described above, the present disclosure may be applied to the underwater detection apparatus of the multi-ping type. However, the present disclosure is not limited to this type, but may be applied to an underwater detection apparatus of another type as long as 3D volume data may be acquired. For example, the present disclosure may be applied to an underwater detection apparatus in which an umbrella-shaped transmission beam is formed over 360°, below the ship so that transmission waves are transmitted, and reflection waves of the transmission waves are received over 360°. Alternatively, the present disclosure may be applied to an underwater detection apparatus in which a history of the echo intensity data acquired from an underwater cross section is stored for a given number of pings so that volume data of a given range is acquired.

Furthermore, although the transmission transducer 2 and the reception transducer 3 may be separately provided in the embodiments described above, they may be integrated. For example, volume data may be generated based on a signal from a transmission/reception transducer in which an ultrasonic transducer for transmitting waves is shared for receiving waves.

Other than these, the embodiments of the present disclosure are variously changeable suitably within a scope of the following claims.

## Claims

1. An underwater detection apparatus (1), comprising:
a transmission transducer (2) configured to transmit a transmission wave;
a reception transducer (3) comprising a plurality of reception elements, each of the reception elements generating a reception signal based on a reflection wave generated by reflection of the transmission wave on an underwater target;
a volume data generation module (21) configured to generate volume data based on the reception signal, the volume data including echo intensity data at each reference position within a detection range; and
a group generation module (22) configured to group the echo intensity data of the volume data into a plurality of groups, by setting a given threshold to the volume data; extracting data from volume data with an echo intensity above the given threshold; generating isosurfaces based on the extracted data; determining a connection between the generated isosurfaces; and setting isosurfaces for which the connection is confirmed, as the same group;
**characterised by**:
a representative echo intensity calculation module (23) configured to calculate a representative echo intensity of a first group from the plurality of groups based on a plurality of echo intensity data contained within the connected isosurfaces of the first group; and
an image data generation module (24) configured to set a property of the connected isosurfaces of the first group based on the representative echo intensity of the first group.

2. The underwater detection apparatus (1) of claim 1, wherein:
the representative echo intensity calculation module (23) is configured to calculate the representative echo intensity of the first group based on an averaging of the plurality of echo intensity data contained within the connected isosurfaces of the first group.

3. The underwater detection apparatus (1) of claim 1, wherein:
the representative echo intensity calculation module (23) is configured to calculate the representative echo intensity of the first group based on the maximum value of the plurality of echo intensity data contained within the connected isosurfaces of the first group.

4. The underwater detection apparatus (1) of any one of the preceding claims, wherein:
the image data generation module (24) is configured to set a colour corresponding to the representative echo intensity as the property.

5. The underwater detection apparatus (1) of any of the preceding claims, wherein:
the image data generation module (24) is configured to set a property of the connected isosurfaces of a second group from the plurality of groups, different from the first group, based on a depth to the connected isosurfaces of the second group.

6. The underwater detection apparatus (1) of claim 5, wherein:
a group type of the first group is a school of fish in water; and
a group type of the second group is a bottom of a body of the water.

7. An underwater detection method, comprising:
transmitting a transmission wave;
receiving a reflection wave generated by reflection of the transmission wave on an underwater target and generating a reception signal;
generating (S101) volume data based on the reception signal, the volume data including echo intensity data at each reference position within a detection range; and
grouping the echo intensity data of the volume data into a plurality of groups, by setting a given threshold to the volume data;
extracting data from the volume data with an echo intensity above the given threshold, and generating isosurfaces based on the extracted data (S103);
determining (S104) a connection between the generated isosurfaces; and
setting (S105) isosurfaces for which the connection is confirmed, as the same group;
**characterised by**:
calculating (S107) a representative echo intensity of a first group from the plurality of groups based on a plurality of echo intensity data contained within the connected isosurfaces of the first group; and
setting (S109) a property of the connected isosurfaces of the first group based on the representative echo intensity of the first group.

8. The method of claim 7, wherein:
the representative echo intensity of the first group is calculated based on an averaging of the plurality of echo intensity data contained within the connected isosurfaces of the first group.

9. The method of claim 7, wherein:
the representative echo intensity of the first group is calculated based on the maximum value of the plurality of echo intensity data contained within the connected isosurfaces of the first group.

10. The method of any of claims 7 to 9, further comprising setting a property of the connected isosurfaces of a second group from the plurality of groups, different from the first group, based on a depth to the connected isosurfaces of the second group.

11. The method of claim 10, wherein:
a group type of the first group is a school of fish in water; and
a group type of the second group is a bottom of a body of the water.

## Patentansprüche

1. Unterwasser-Detektionsvorrichtung (1), die Folgendes umfasst:
einen Übertragungswandler (2), konfiguriert zum Übertragen einer Übertragungswelle;
einen Empfangswandler (3), der mehrere Empfangselemente umfasst, wobei jedes der Empfangselemente ein Empfangssignal auf der Basis einer durch Reflexion der Übertragungswelle an einem Unterwasserziel erzeugten Reflexionswelle erzeugt;
ein Volumendatenerzeugungsmodul (21), konfiguriert zum Erzeugen von Volumendaten auf der Basis des Empfangssignals, wobei die Volumendaten Echointensitätsdaten an jeder Referenzposition innerhalb eines Detektionsbereichs umfassen; und
ein Gruppenerzeugungsmodul (22), konfiguriert zum Gruppieren der Echointensitätsdaten der Volumendaten in mehrere Gruppen durch Festlegen eines gegebenen Schwellenwerts für die Volumendaten; Extrahieren von Daten aus Volumendaten mit einer Echointensität über dem gegebenen Schwellenwert; Erzeugen von Isoflächen auf der Basis der extrahierten Daten; Bestimmen einer Verbindung zwischen den erzeugten Isoflächen; und Festlegen von Isoflächen, für die die Verbindung bestätigt ist, als dieselbe Gruppe;
**gekennzeichnet durch**:
ein Modul (23) zum Berechnen einer repräsentativen Echointensität, konfiguriert zum Berechnen einer repräsentativen Echointensität einer ersten Gruppe aus den mehreren Gruppen auf der Basis von mehreren Echointensitätsdaten, die in den verbundenen Isoflächen der ersten Gruppe enthalten sind; und
ein Modul (24) zum Erzeugen von Bilddaten, konfiguriert zum Festlegen einer Eigenschaft der verbundenen Isoflächen der ersten Gruppe auf der Basis der repräsentativen Echointensität der ersten Gruppe.

2. Unterwasser-Detektionsvorrichtung (1) nach Anspruch 1, wobei:
das Modul (23) zum Berechnen einer repräsentativen Echointensität zum Berechnen der repräsentativen Echointensität der ersten Gruppe auf der Basis eines Mittelwerts der mehreren in den verbundenen Isoflächen der ersten Gruppe enthaltenen Echointensitätsdaten

3. Unterwasser-Detektionsvorrichtung (1) nach Anspruch 1, wobei:
das Modul (23) zum Berechnen einer repräsentativen Echointensität zum Berechnen der repräsentativen Echointensität der ersten Gruppe auf der Basis des Maximalwerts der mehreren in den verbundenen Isoflächen der ersten Gruppe enthaltenen Echointensitätsdaten konfiguriert ist.

4. Unterwasser-Detektionsvorrichtung (1) nach einem der vorherigen Ansprüche, wobei:
das Modul (24) zum Erzeugen von Bilddaten zum Festlegen einer Farbe entsprechend der repräsentativen Echointensität als Eigenschaft konfiguriert ist.

5. Unterwasser-Detektionsvorrichtung (1) nach einem der vorherigen Ansprüche, wobei:
das Modul (24) zum Erzeugen von Bilddaten zum Festlegen einer Eigenschaft der verbundenen Isoflächen einer sich von der ersten Gruppe unterscheidenden zweiten Gruppe der mehreren Gruppen auf der Basis einer Tiefe zu den verbundenen Isoflächen der zweiten Gruppe konfiguriert ist.

6. Unterwasser-Detektionsvorrichtung (1) nach Anspruch 5, wobei:
ein Gruppentyp der ersten Gruppe ein Fischschwarm im Wasser ist; und
ein Gruppentyp der zweiten Gruppe ein Gewässergrund ist.

7. Unterwasser-Detektionsverfahren, das Folgendes beinhaltet:
Übertragen einer Übertragungswelle;
Empfangen einer durch Reflexion der Übertragungswelle an einem Unterwasserziel erzeugten Reflexionswelle und Erzeugen eines Empfangssignals;
Erzeugen (S101) von Volumendaten auf der Basis des Empfangssignals, wobei die Volumendaten Echointensitätsdaten an jeder Referenzposition innerhalb eines Detektionsbereichs umfassen; und
Gruppieren der Echointensitätsdaten der Volumendaten in mehrere Gruppen durch Festlegen eines gegebenen Schwellenwerts für die Volumendaten;
Extrahieren von Daten aus den Volumendaten mit einer Echointensität über dem gegebenen Schwellenwert und Erzeugen von Isoflächen auf der Basis der extrahierten Daten (S103);
Bestimmen (S104) einer Verbindung zwischen den erzeugten Isoflächen; und
Festlegen (S105) von Isoflächen, für die die Verbindung bestätigt ist, als dieselbe Gruppe;
**gekennzeichnet durch**:
Berechnen (S107) einer repräsentativen Echointensität einer ersten Gruppe aus den mehreren Gruppen auf der Basis von mehreren in den verbundenen Isoflächen der ersten Gruppe enthaltenen Echointensitätsdaten; und
Festlegen (S109) einer Eigenschaft der verbundenen Isoflächen der ersten Gruppe auf der Basis der repräsentativen Echointensität der ersten Gruppe.

8. Verfahren nach Anspruch 7, wobei:
die repräsentative Echointensität der ersten Gruppe auf der Basis eines Mittelwerts der mehreren in den verbundenen Isoflächen der ersten Gruppe enthaltenen Echointensitätsdaten berechnet wird.

9. Verfahren nach Anspruch 7, wobei:
die repräsentative Echointensität der ersten Gruppe auf der Basis des Maximalwerts der mehreren in den verbundenen Isoflächen der ersten Gruppe enthaltenen Echointensitätsdaten berechnet wird.

10. Verfahren nach einem der Ansprüche 7 bis 9, das ferner das Festlegen einer Eigenschaft der verbundenen Isoflächen einer sich von der ersten Gruppe unterscheidenden zweiten Gruppe von mehreren Gruppen auf der Basis einer Tiefe zu den verbundenen Isoflächen der zweiten Gruppe umfasst.

11. Verfahren nach Anspruch 10, wobei:
ein Gruppentyp der ersten Gruppe ein Fischschwarm im Wasser ist; und
ein Gruppentyp der zweiten Gruppe ein Gewässergrund ist.

## Revendications

1. Appareil de détection sous-marine (1), comprenant :
un transducteur d'émission (2) configuré pour émettre une onde d'émission ;
un transducteur de réception (3) comprenant une pluralité d'éléments de réception, chacun des éléments de réception générant un signal de réception sur la base d'une onde de réflexion générée par la réflexion de l'onde d'émission sur une cible sous-marine ;
un module de génération de données de volume (21) configuré pour générer des données de volume sur la base du signal de réception, les données de volume comprenant des données d'intensité d'écho à chaque position de référence dans une plage de détection ; et
un module de génération de groupe (22) configuré pour regrouper les données d'intensité d'écho des données de volume en une pluralité de groupes, en définissant un seuil donné pour les données de volume ; en extrayant, des données de volume, des données présentant une intensité d'écho supérieure au seuil donné ; en générant des isosurfaces sur la base des données extraites ; en déterminant une liaison entre les isosurfaces générées ; et en définissant comme un même groupe les isosurfaces dont la liaison est confirmée ;
l'appareil étant **caractérisé par** :
un module de calcul d'intensité d'écho représentative (23) configuré pour calculer une intensité d'écho représentative d'un premier groupe de la pluralité de groupes sur la base d'une pluralité de données d'intensité d'écho contenues dans les isosurfaces reliées du premier groupe ; et
un module de génération de données d'image (24) configuré pour définir une propriété des isosurfaces reliées du premier groupe sur la base de l'intensité d'écho représentative du premier groupe.

2. Appareil de détection sous-marine (1) selon la revendication 1,
le module de calcul d'intensité d'écho représentative (23) étant configuré pour calculer l'intensité d'écho représentative du premier groupe sur la base d'une moyenne de la pluralité de données d'intensité d'écho contenues dans les isosurfaces reliées du premier groupe.

3. Appareil de détection sous-marine (1) selon la revendication 1,
le module de calcul d'intensité d'écho représentative (23) étant configuré pour calculer l'intensité d'écho représentative du premier groupe sur la base de la valeur maximale de la pluralité de données d'intensité d'écho contenues dans les isosurfaces reliées du premier groupe.

4. Appareil de détection sous-marine (1) selon l'une quelconque des revendications précédentes,
le module de génération de données d'image (24) étant configuré pour définir en tant que propriété une couleur correspondant à l'intensité d'écho représentative.

5. Appareil de détection sous-marine (1) selon l'une quelconque des revendications précédentes,
le module de génération de données d'image (24) étant configuré pour définir une propriété des isosurfaces reliées d'un second groupe de la pluralité de groupes, différent du premier groupe sur la base d'une profondeur des isosurfaces reliées du second groupe.

6. Appareil de détection sous-marine (1) selon la revendication 5,
un type de groupe du premier groupe étant un banc de poissons dans l'eau ; et
un type de groupe du second groupe étant un fond d'une masse de l'eau.

7. Procédé de détection sous-marine, comprenant les étapes consistant à :
émettre une onde d'émission ;
recevoir une onde de réflexion générée par la réflexion de l'onde d'émission sur une cible sous-marine et générer un signal de réception ;
générer (S101) des données de volume sur la base du signal de réception, les données de volume comprenant des données d'intensité d'écho à chaque position de référence dans une plage de détection ; et
regrouper les données d'intensité d'écho des données de volume en une pluralité de groupes, en effectuant les étapes consistant à :
définir un seuil donné pour les données de volume ;
extraire, des données de volume, des données présentant une intensité d'écho supérieure au seuil donné, et générer des isosurfaces sur la base des données extraites (S103) ;
déterminer (S104) une liaison entre les isosurfaces générées ; et
définir (S105) comme un même groupe les isosurfaces dont la liaison est confirmée ;
le procédé étant **caractérisé par** les étapes consistant à :
calculer (S107) une intensité d'écho représentative d'un premier groupe de la pluralité de groupes sur la base d'une pluralité de données d'intensité d'écho contenues dans les isosurfaces reliées du premier groupe ; et
définir (S109) une propriété des isosurfaces reliées du premier groupe sur la base de l'intensité d'écho représentative du premier groupe.

8. Procédé selon la revendication 7,
l'intensité d'écho représentative du premier groupe étant calculée sur la base d'une moyenne de la pluralité de données d'intensité d'écho contenues dans les isosurfaces reliées du premier groupe.

9. Procédé selon la revendication 7,
l'intensité d'écho représentative du premier groupe étant calculée sur la base de la valeur maximale de la pluralité de données d'intensité d'écho contenues dans les isosurfaces reliées du premier groupe.

10. Procédé selon l'une quelconque des revendications 7 à 9, comprenant en outre l'étape consistant à définir une propriété des isosurfaces reliées d'un second groupe de la pluralité de groupes, différent du premier groupe, sur la base d'une profondeur des isosurfaces reliées du second groupe.

11. Procédé selon la revendication 10,
un type de groupe du premier groupe étant un banc de poissons dans l'eau ; et
un type de groupe du second groupe étant un fond d'une masse de l'eau.
